# EUROPEAN PATENT APPLICATION

(11) **EP 2 286 950 A2**
(43) Date of publication of application: **23.02.2011**
(21) Application number: 10008655.2
(22) Date of filing: 19.08.2010
(51) Int. Cl.: B23K 9/133, B23K 9/18, B65H 49/08, B65H 57/12, F16L 3/015, F16L 11/18

(54) **System for a submerged welding process with a guiding system with rolling element ; Method of operating a submerged arc welding system, with welding the extremities of filler wires**

(30) Priority: 21.08.2009 US 545717
(71) Applicant: SIDERGAS SpA, 37010 S. Ambrogio di Valpolicella (IT); STARPOINT di Gelmetti Carlo & C.SAS, 37017 Lazise (VR) (IT)
(72) Inventor: Gelmetti, Carlo, 37017 Lazise (VR) (IT)
(74) Representative: Prinz & Partner

(57) **Abstract**

A system for submerged arc welding, having a container (1) in which welding wire (2) is stored so as to be available for welding, a welding torch (5), a guiding system (3) for guiding the welding wire from the container (1) towards the welding torch (5), and a feeder (4) for moving the welding wire (2) from the container (1) through the guiding system (3) towards the welding torch (5), the guiding system (4) using at least one rolling element for guiding the welding wire (2). A method of operating a submerged arc welding system, wherein a first supply of welding wire (2) and a second supply of welding wire (2) are provided, the first and the second supplies each having a forward end and a rearward end, wherein the rearward end of the first supply is welded to the forward end of the second supply such that a weld is formed which can be fed through the submerged arc welding system.

## Description

The invention relates to a system for feeding welding wire in a submerged arc welding system.

A submerged arc welding system is a particular welding process which requires a continuously fed consumable solid or tubular (flux cored) electrode usually formed by a welding wire. The molten weld and the arc zone are protected from atmospheric contamination by being "submerged" under a blanket of granular fusible flux consisting of lime, silica, manganese oxide, calcium fluoride, and other compounds. When molten, the flux becomes conductive, and provides a current path between the electrode and the work. This thick layer of flux completely covers the molten metal thus preventing spatter and sparks as well as suppressing the intense ultraviolet radiation and fumes that are a part of the shielded metal arc welding process.

A shielded metal arc welding process is used in many application like seam welding on sheet metal, mold rebuilding, pressure vessels, offshore structures, pipe mills, wind turbine towers, etc. The advantages of this welding process are high deposition rates, high operating factors in mechanized applications, deep weld penetration, sound welds (with good process design and control), high speed welding of thin sheet steels, minimal welding fume or arc light being emitted, practically no edge preparation being necessary, and very few distortions of the work pieces. The process is suitable for both indoor and outdoor works. The welds which are produced are sound, uniform, ductile, corrosion resistant and have good impact value. Single pass welds can be made in thick plates with normal equipment. As the arc is always covered under a blanket of flux, there is no chance of spatter of weld. 50% to 90% of the flux is recoverable.

The process however must employ, in order to achieve the desired high deposition rate, thick wire electrodes, with diameters varying from 1.60 mm (0.062") and 6.00 mm. The most common diameter is 4.00 mm (5/32")

The product packaging formats vary from 20 to 100 kg coils or spools and 250 to 500 kg drums. Because of the wire thickness the wire in the drums is not twist-free and torsion-free, and the drum is normally mounted on a turntable which helps eliminate the natural torsion of the wire while feeding.

Both systems, spools and bulk containers (packs or drums) experience a number of problems and issues:
Spools cannot be easily lifted and mounted on the spool holder and new stricter safety regulations impose to reduce the amount of weight that can be manually carried by an operator; this increases the time lost to change used empty spools with new ones; because of the frequent changes necessary, spools generate a lot of downtime and consequent production costs. Also weld interruptions (especially on pressure vessels and tanks) can cause leaks and weld defects, with porosity, bad penetration and mechanical properties lower than minimum standard requirements. Very often the residual quantity of wire on a spool is scrapped rather than interrupting a weld bead.

The turntables needed to operate the bulk drums are expensive and use a lot of space. The wire in the drums is normally affected by a pronounced tight cast which requires the use of a wire straightener before feeding the wire through the torch.

The object of the invention is to provide a submerged arc welding system which is of simple construction and allows to use thick welding wire in large quantities without frequent interruptions of the welding process.

The invention provides a system for submerged arc welding, having a container in which welding wire is stored so as to be available for welding, the welding wire being a twist-free, torsion-free welding wire, a welding torch, a guiding system for feeding the welding wire from the container to the welding torch, the guiding system using at least one rolling element for guiding the welding wire, and a feeder for the initial feeding of the welding wire from the container through the guiding system towards the welding torch. Using twist-free and torsion-free welding wire allows the welding wire to be paid from a container which can stand fixedly. No rotating drums or turntables are necessary. As twist-free and torsion-free welding wire is used which for submerged arc welding has a considerable diameter, the container has to have a large diameter (minimum 800 mm - average diameter is 1000 mm). Otherwise, the welding wire with the required diameter could not be wound into the container. Because of the large dimensions of the container, the drum or pack can only be placed at a distance from the welding torch. The guiding system however provides for a smooth travel of the welding wire over the distance between the container and the welding torch, the rolling element helping to reduce the friction. Further, the guiding system helps to avoid that permanent deformations of the welding wire occur during the travel from the container to the welding torch.

According to an embodiment of the invention, the container has a cross section which is one of a polygonal and a circular cross section. These cross sections are particularly suitable for storing the welding wire.

According to an embodiment of the invention, the container contains a quantity of more than 100 kg of welding wire. The more welding wire is contained in one container, the fewer interruptions of a welding process occur.

Preferably, the welding wire has a diameter of 1.6 mm or more, in particular of at least 3.2 mm, preferably 4.0 mm. Thicker welding wire allows to achieve high deposition rates.

According to an embodiment of the invention, the guiding system guides the welding wire over a distance of at least 3 m up to a maximum of 50 meters. This allows to place the container at a distance from the welding torch so that such container does not interfere with the working environment and the work piece which is currently welded. In practice, the distance can be even significantly large so that the container can be placed at a location which is easily accessible by a fork lift and this, besides making the working environment safer, also simplifies considerably the handling operations.

According to an embodiment of the invention, the guiding system comprises at least two hoses and at least one rolling element between the two hoses. The rolling element allows to deflect the welding wire between the two hoses so that friction is significantly reduced.

According to one variant, the hoses are rigid. This allows to easily install the hoses.

According to another variant, the hoses are flexible. This allows to adapt the hoses to the space available for installation.

According to another embodiment of the invention, the guiding system uses a plurality of guiding elements, each guiding element comprising at least one rolling element. This embodiment is based on the idea of using a couple of discrete guiding elements instead of a continuous hose guide. The individual guiding elements can be arranged spaced from each other along a support.

Preferably, each guiding element comprises a plurality of rolling elements. This allows to guide the welding wire with low friction.

According to another embodiment of the invention, the guiding system comprises at least one flexible liner. The liner being flexible, it can yield and adapt itself within certain limits to the welding wire, thereby reducing the friction which occurs when the welding wire travels through the guiding system and at the same time keeping the wire protected from contamination and keeping the operators from involuntarily come in contact with the wire, while welding .

Preferably, the flexible liner comprises a plurality of liner bodies, each liner body being pivotable with respect to the adjacent liner around a defined axis, the pivot axis between a first and a second liner body being perpendicular to the pivot axis between a second and a third liner. The construction allows to liner to be flexible in all directions while at the same time not using the deformation of material for achieving this flexibility,

According to an embodiment of the invention, the liner body comprises four rolling elements, the axis of rotation of the rolling elements being arranged in one plane. This results in very compact liner bodies which are able to guide the welding wire in each direction.

According to an embodiment of the invention, the feeder is arranged close to the welding torch such that it pulls the welding wire from the container through the guiding system. This ensures that the welding wire is supplied to the welding torch smoothly.

According to an embodiment of the invention, a wire pushing device is provided which is arranged between the container and the guiding system. The wire pushing device allows to insert into the liner the welding wire from a new container by pushing it from the container through the guiding system towards the feeder, which eventually can take over the task of feeding the welding wire through the torch. After the initial pushing is completed, the pushing system can be disconnected and removed from the dome.

Preferably, the container is provided with a dome, the wire pushing device being arranged at the dome. With this construction, the wire pushing device can remain mounted on the dome or be removed to be used on a different dome. If left on the dome, it does not involve any additional work when changing from one container to the next, as the wire pushing device is automatically installed at the second container when the dome is moved from the first to the second container.

The wire pushing device can be operated by means of a switch, the switch being adapted for being actuated manually, electrically or by means of a remote control.

The invention further provides a method of operating a submerged arc welding system, wherein a first supply of welding wire and a second supply of welding wire are provided, the first and the second supplies each having a forward end and a rearward end, wherein the rearward end of the first supply is welded to the forward end of the second supply such that a weld is formed which can be fed through the submerged arc welding system. This method minimizes down time when changing from the welding wire supplied by the current, consumed container to a new container full of welding wire. In particular, it avoids that the welding wire of the new container has to be threaded through the entire system from the beginning of the guiding system towards the welding torch, after the welding wire taken from the subsequent container has been completely consumed. Due to this method, the welding wire from the fresh container is automatically drawn into the system and finally arrives at the welding torch.

Preferably, the rearward end of the first supply and the forward end of the second supply are butt-welded to each other. In order to avoid an excess of burr at the point where the wire is welded, the ends to be welded to each other are formed beveled before being welded.

The invention will now be described with reference to different embodiments which are shown in the enclosed drawings. In the drawings,
- Figure 1 shows a system for submerged arc welding according to a first embodiment;
- Figure 2 shows a perspective view of a couple of liner bodies forming the guiding system used in the first embodiment;
- Figure 3 shows a perspective view of the guiding system used in the first embodiment, with one liner body being shown open;
- Figure 4 shows one half of a liner body used in the guiding system of the first embodiment;
- Figure 5 shows a system for submerged arc welding wire according to a second embodiment;
- Figure 6 shows a system for submerged arc welding according to a third embodiment;
- Figure 7 shows a first embodiment of a guiding element used in the guide system of the third embodiment;
- Figure 8 shows a second embodiment of a guiding element used in the guiding system of the third embodiment;
- Figure 9 shows a third embodiment of a guiding element used in the guiding system of the third embodiment;
- Figure 10 shows a container provided with a dome to which a wire pushing device is attached;
- Figure 11 shows the wire pushing device of Figure 10 at an enlarged scale;
- Figure 12 shows a cross section through the wire pushing device of Figure 11;
- Figure 13 shows two ends of welding wire to be welded together, which are formed according to the invention;
- Figure 14 shows the two ends of Figure 13 after being welded to each other;
- Figure 15 shows two prior art welding wire ends after being welded to each other;
- Figure 16 shows a container with a dome; and
- Figure 17 shows the container of Figure 16 with the dome being opened.

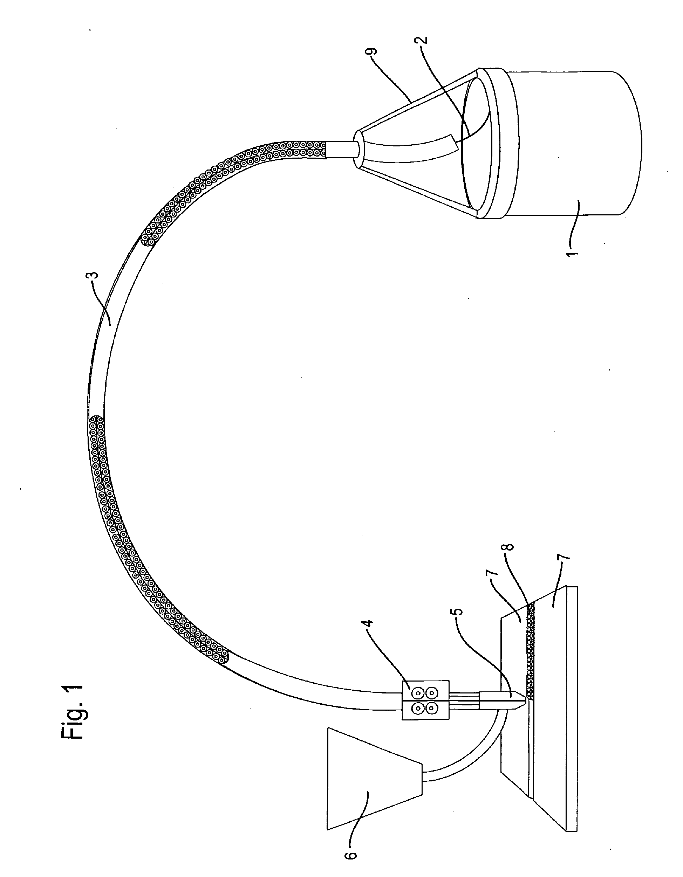

Figure 1 shows a system for submerged arc welding. The system comprises a container 1 in which welding wire 2 is stored so as to be available for welding. The welding wire 2 is guided through a guiding system 3 towards a feeder 4 which is arranged close to a welding torch 5. Associated with welding torch 5 is a flux bulk container 6 in which a certain quantity of flux is provided, preferably in granular form. Welding torch 5 presents the welding wire 2 at a welding spot where two work pieces 7 are to be joined by means of a weld 8. Guiding system 3 at one end is accommodated at a dome 9 which is placed on top of container 1, and at the other end extends toward feeder 4. For the sake of clarity, electrical contacts which conduct the electric current necessary for arc welding, are not shown.

An essential feature of the system is that the welding wire 2 is contained in container 1 in a twist free and torsion free manner. This means that the welding wire, when being withdrawn from container 1, does not have any significant prestress due to residual torsional loads. This ensures that the welding wire, when withdrawn from the container, does not have a tendency to resume a coiled condition, which would result in significant friction occurring when the welding wire is fed through the guiding system 3. As submerged arc welding requires a considerable thickness of the welding wire of at least 1.6 mm and preferably in the range of 3.2 to 4.0 or even up to 6.0 mm, any bending forces inherent to the welding wire would be significant.

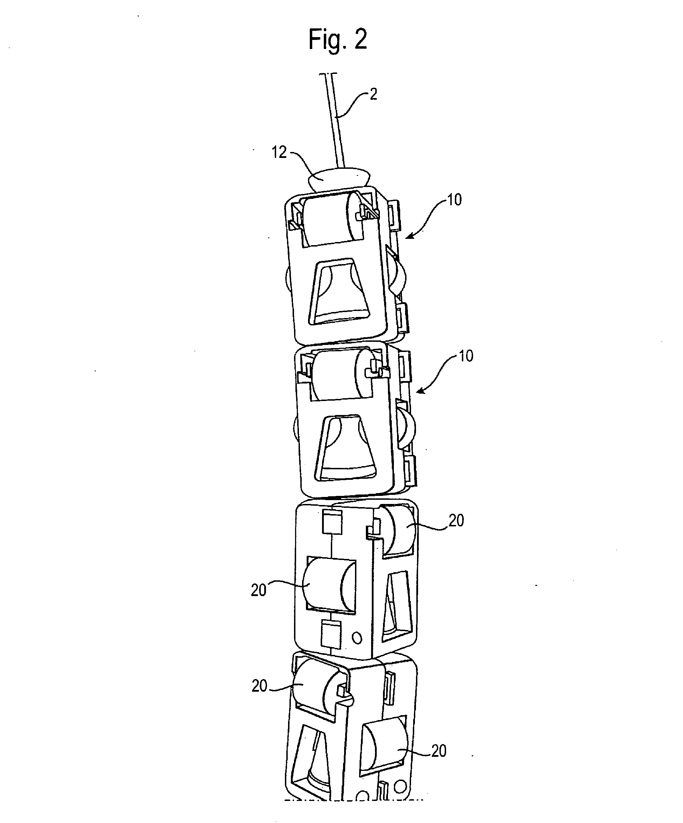

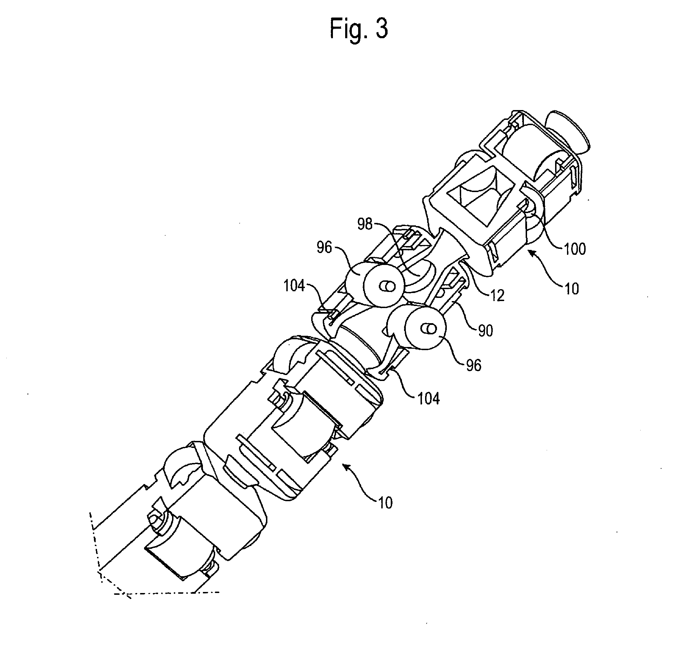

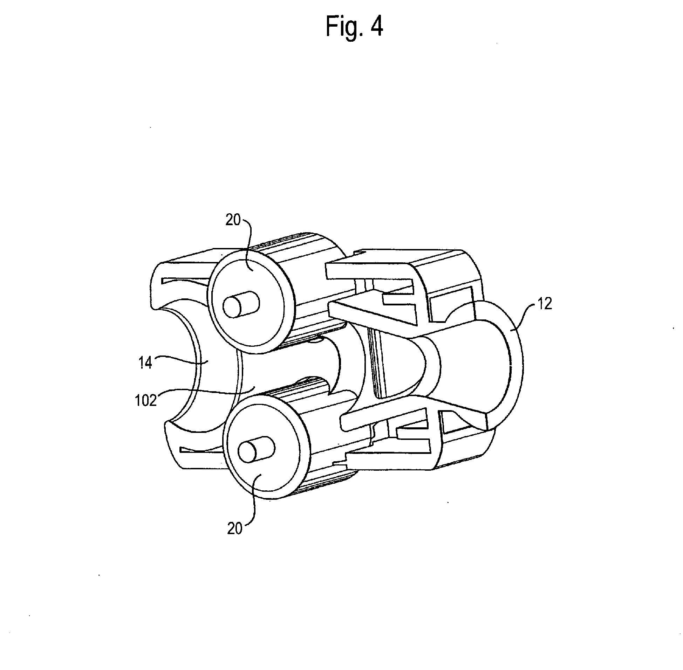

In the first embodiment, a wire guiding liner is used as the wire guiding system 3. An embodiment of this wire guiding liner is shown in Figures 2 to 4.

The wire guiding liner consists of a plurality of identical guiding or liner bodies 10 which are pivotally connected to each other. Each liner body 10 comprises a pivot stud 12 having a partly spherical shape. The pivot stud 12 of one liner body 10 engages into a complementary opening 14 of the adjacent liner body. Thereby, a chain of liner bodies is provided, which are pivotable with respect to each other. Each liner body 10 holds two pairs of rolling elements 20 which are rotatably accommodated in the respective liner body. The rotation axes of the rolling elements are arranged pairwise in parallel, with the rotation axis of two opposite rolls being perpendicular to the rotation axis of the rolls of the other pair.

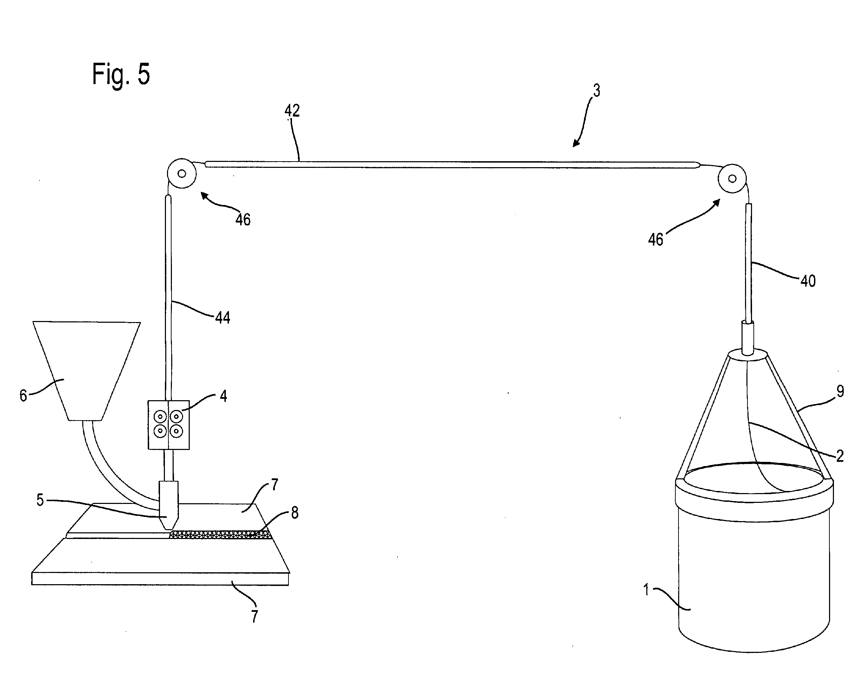

A second embodiment of a system for submerged arc welding is shown in Figure 5. The difference between the first and the second embodiment is the guiding system 3 which is used here. In the second embodiment, the guiding system comprises three hoses 40, 42, 44, which each extend over a certain portion of the distance over which the welding wire is guided from the container 1 towards the feeder 4. Between adjacent hoses, a rolling element 46 is arranged. The rolling elements smoothly guide the welding wire at each location where the feeding direction of the welding wire is changed. This allows to use straight hoses 40, 42, 44, thereby avoiding unnecessary friction. The hoses can be formed rigid which makes it easier to install them. As an alternative, flexible hoses can be used which can be more easily adapted to the space available for mounting. However, smooth curvatures with large bending radiuses are preferred in order to prevent excessive friction from occurring.

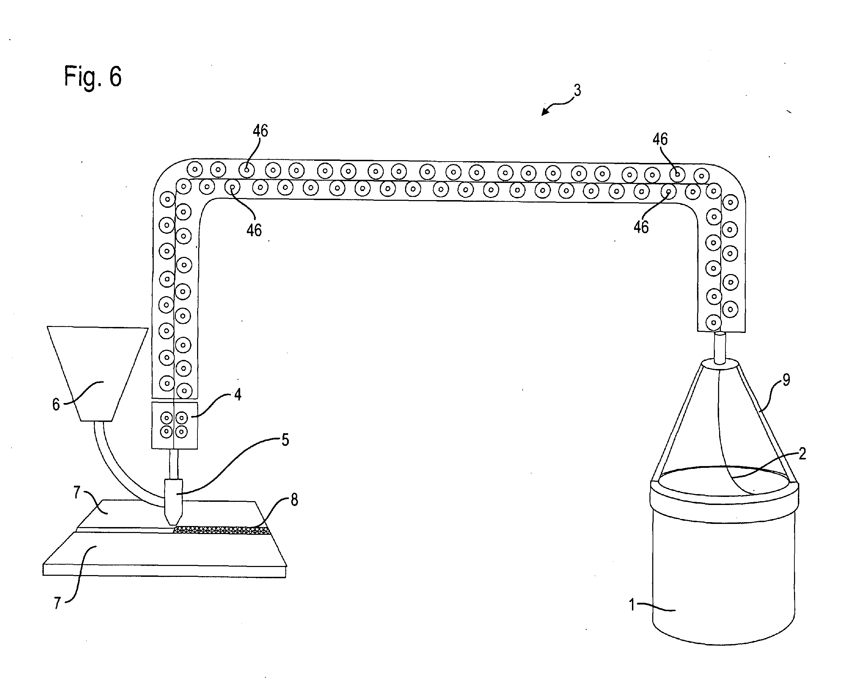

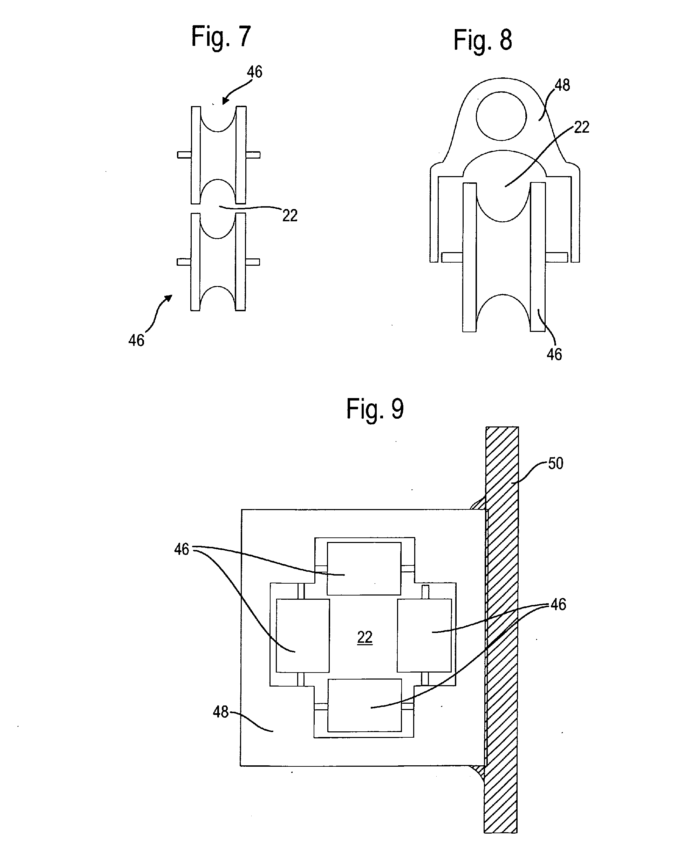

In Figure 6, a system for submerged arc welding according to a third embodiment is shown. The difference over the first and the second embodiment again lies in the guiding system which is used. In the second embodiment, the guiding system uses a plurality of rolling elements 46 which are spaced from each other along the guide. Rolling elements 46 in their entirety define a path for the welding wire 2 by providing guiding surfaces at discrete locations spaced from each other. An example of rolling elements 46 which can be used in guiding system 3 according to the third embodiment is shown in Figure 7. Here, two rolling elements 46 are used which are mounted opposite each other such that they are rotatable about a rotation axis.

An alternative construction is shown in Figure 8. Here, a single rolling element 46 is used which is mounted in a holder 48. Holder 48 can be suspended along a supporting beam such that the welding wire is guided along considerable distances from container 1 to feeder 4. In Figure 9, an alternative construction of a guiding element using a plurality of rolls 46 is shown. Here, holder 48 is connected to a supporting beam 50, for example by welding, and holds four rolling elements 46. Rolling elements 46 are arranged opposite each other in pairs such that the cylindrical outer surfaces of adjacent rolling elements overlap.

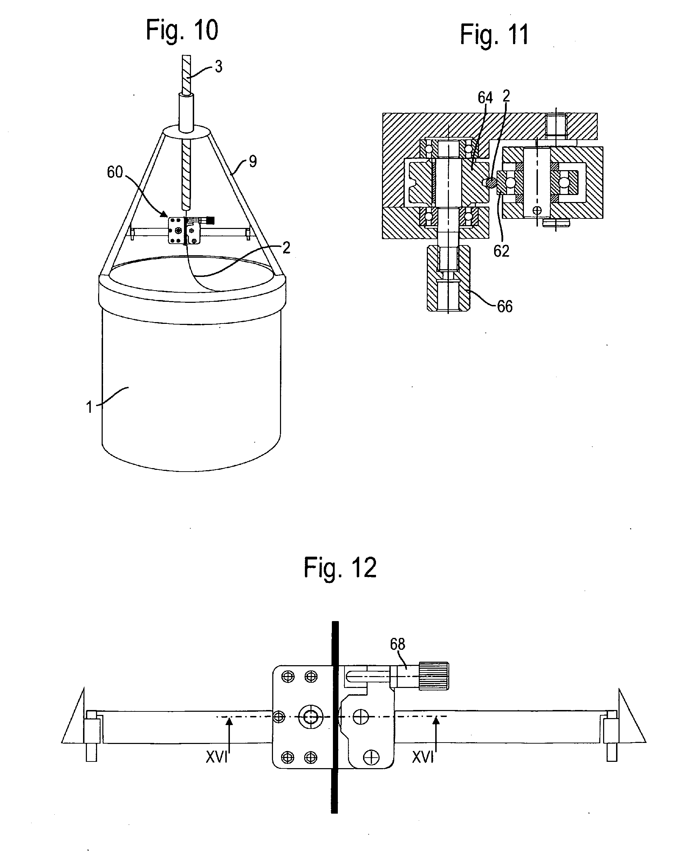

In order to assist an operator in feeding a fresh welding wire from container 1 towards feeder 4, a wire pushing device 60 (please see Figure 10) can be used. The wire pushing device 60 is preferably attached to a holding beam provided at dome 9 so that it is automatically moved from one container to the next whenever the dome 9 is moved to the next container. Wire pushing device 60 basically comprises a pressure wheel 62 and a drive wheel 64 which engage welding wire 2. Drive wheel 64 is mechanically connected to a coupling 66 to which a drive motor (not depicted) can be attached. As a drive motor, an electrically driven hand drill can be used. Other electric motors can be used as well. Wire pushing device 60 pushes the welding wire from the container through the guiding system into the feeder 4 where the feeder finally engages the welding wire and pushes it into the welding torch. As soon as feeder 4 has taken control, wire pushing device 60 is no longer necessary. Pushing wheel 62 can be released by operating screw 68 so as to release welding wire 2.

As an alternative to manually operate wire pushing device 60, an electric actuation or a remote control can be used so that a single operator can fit a new welding wire to the welding system by supporting the welding wire in becoming inserted into the guiding system 3, with the wire pushing device being operated to push the wire when it can freely travel, and the wire pushing device being stopped as soon as the forward end of the welding wire does no longer travel smoothly but has encountered an obstacle.

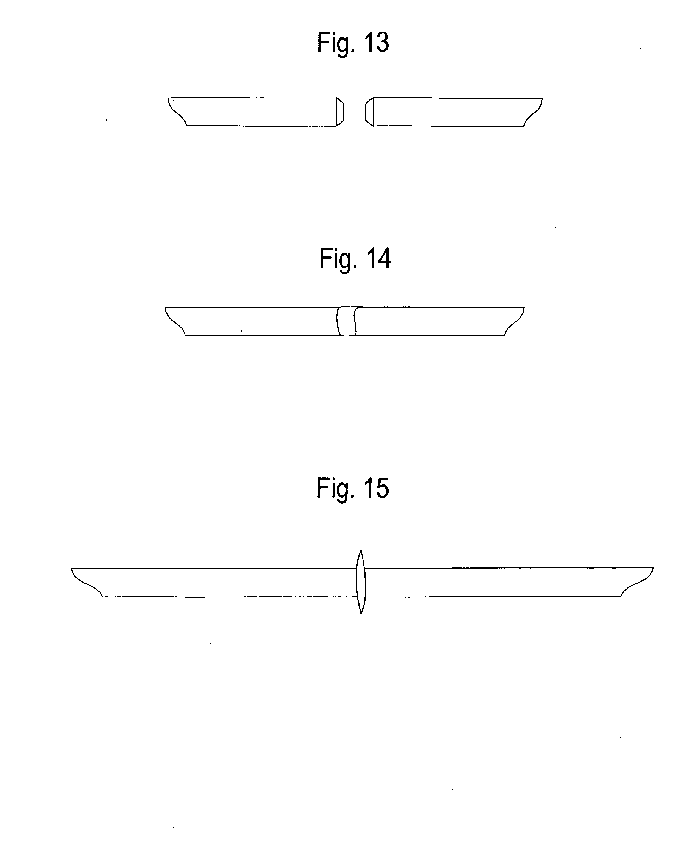

In order to avoid that a new welding wire has to be fitted to the system each time the welding wire contained in one container has been entirely consumed, it is advisable to connect the rear end of a first (currently used) container with the forward end of the welding wire contained in a new container. This is preferably done by butt-welding the rearward end of the welding wire of the first container to the forward end of the welding wire of the second, new container. Preferably, the two ends of the welding wire are first provided with a beveled shape (please see Figure 13) before being butt-welded. This particular shape of the ends of the welding wire guarantee that there is a minimal burr only which makes deburring very easy. If no beveled form of the ends of the welding wire was used, significant burrs would occur, which are depicted in Figure 15. As deburring would have to be made inside the dome, significant down time would be the consequence.

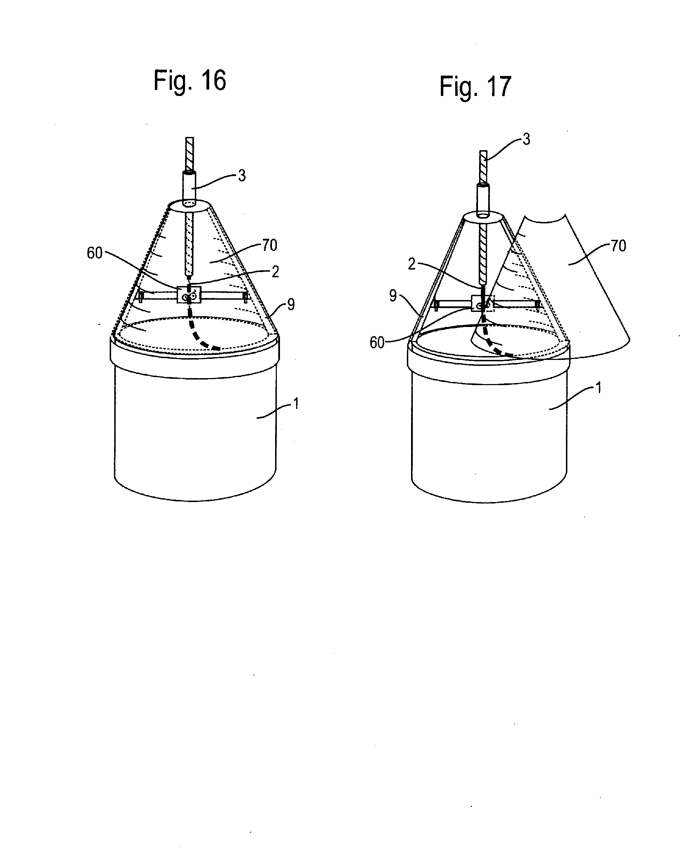

Figure 16 shows in more detail container 1 with dome 9. The dome comprises a solid frame which extends upwardly from the upper opening of the container. It is essential that dome 9 has a large opening through which a person can access the inside to either push the wire with the wire pushing device or to butt-welding the end of a used pack to a new pack, and possibly also grind the joint to remove the burr, after the butt-welding.

The dome 9 is provided with a cover 70. The reason for providing a cover is that the dome cannot stay open because dirt and dust and moisture would contaminate the wire surface. The cover is made from plastics, preferably from a transparent material so that the interior of the container can be easily inspected, e.g. for determining the amount of remaining welding wire. In order to allow easy access to the interior, the cover is made from a plurality of covering sections so that the operator can easily remove one section. In practice, using two to four sections for the cover has proven convenient. If an operator has to work on the welding wire, he takes off one of the sections or all sections, if necessary, does his work inside the dome, and after he is done, he re-mounts the covering section, so that the wire stay perfectly protected.

As can be seen in Figures 1, 10 and 16, 17, the guiding system 3 extends through the dome towards the upper surface of the welding wire coil. It has proven to aid in smoothly withdrawing the welding wire from the container if the guiding system, when formed as a flexible liner through which the welding wire travels, continues beyond the dome by at least 5 cm, in some cases to a level close to the upper surface of a fresh, unused welding wire coil. The liner follows the movement of the welding wire in the space inside the dome, thereby preventing tangles and knots from occurring.

## Claims

1. A system for submerged arc welding, having a container in which welding wire is stored so as to be available for welding, the welding wire being a twist-free, torsion-free welding wire, a welding torch, a guiding system for guiding the welding wire from the container towards the welding torch, the guiding system using at least one rolling element for guiding the welding wire, and a feeder for moving the welding wire from the container through the guiding system towards the welding torch.

2. The system of claim 1 wherein the container has a cross section which is one of a polygonal and a circular cross section.

3. The system of claim 1 or claim 2wherein the container contains a quantity of more than 100 kg of welding wire.

4. The system of any of the preceding claims wherein the welding wire has a diameter of 1.6 mm or more.

5. The system of claim 4 wherein the diameter is at least 3.2 mm, preferably 4.0 mm.

6. The system of any of the preceding claims wherein the guiding system guides the welding wire over a distance of at least 3 m.

7. The system of any of the preceding claims wherein the guiding system comprises at least two hoses and at least one rolling element between the two hoses.

8. The system of claim 7 wherein the hoses are rigid.

9. The system of claim 7 wherein the hoses are flexible.

10. The system of any of the preceding claims wherein the guiding system uses a plurality of guiding elements, each guiding element comprising at least one rolling element.

11. The system of claim 10 wherein the guiding elements are arranged spaced from each other along a support.

12. The system of claim 11 wherein each guiding element comprises a plurality of rolling elements.

13. The system of any of the preceding claims wherein the guiding system comprises at least one flexible liner.

14. The system of claim 13 wherein the flexible liner comprises a plurality of liner bodies, each liner body being pivotable with respect to the adjacent liner body.

15. The system of any of the preceding claims wherein the feeder is arranged close to the welding torch such that it pulls the welding wire from the container through the guiding system.

16. The system of any of the preceding claims wherein a wire pushing device is provided which is arranged between the container and the guiding system.

17. The system of claim 16 wherein a switch for operating the wire pushing device is provided, the switch being adapted for being actuated with one of a manual actuation, an electric actuation and a remote control actuation.

18. The system of any of the preceding claims wherein the container is provided with a dome having a rigid frame.

19. The system of claim 18 in combination with claim 16 wherein the wire pushing device is arranged at the dome.

20. The system of claim 18 or claim 19 wherein the dome has a shape which is one of a pyramidal shape and a fusto-conical shape.

21. The system of any of claims 18 to 20 wherein a protective cover is provided at the dome.

22. The system of claim 21 wherein the cover is made from flexible rubber pieces or rigid.

23. The system of any of claims 18 to 22 wherein a flexible liner is used as a guiding system, the liner extending from the outside into the dome by at least 5 cm.

24. A method of operating a submerged arc welding system, wherein a first supply of welding wire and a second supply of welding wire are provided, the first and the second supplies each having a forward end and a rearward end, wherein the rearward end of the first supply is welded to the forward end of the second supply such that a weld is formed which can be fed through the submerged arc welding system.

25. The method of claim 24 wherein the rearward end of the first supply and the forward end of the second supply are butt-welded to each other.

26. The method of claim 25 wherein the ends to be welded to each other are formed beveled before being welded.
